# EUROPÄISCHE PATENTSCHRIFT

(11) **EP 1 609 272 B1**
(45) Veröffentlichungstag und Bekanntmachung des Hinweises auf die Patenterteilung: **19.11.2008**
(21) Anmeldenummer: 03757012.4
(22) Anmeldetag: 03.06.2003
(51) Int. Cl.: H04L 12/403

(54) **KOMMUNIKATIONSVERFAHREN UND SYSTEM HIERFÜR**
COMMUNICATION METHOD AND CORRESPONDING SYSTEM
PROCEDE DE COMMUNICATION ET SYSTEME CORRESPONDANT

(30) Priorität: 10.06.2002 DE 10225567
(43) Veröffentlichungstag der Anmeldung: 28.12.2005
(73) Patentinhaber: Endress + Hauser Conducta GmbH + Co. KG, 70839 Gerlingen (DE)
(72) Erfinder: GEHRKE, Martin, 71384 Weinstadt (DE); GUNZERT, Michael, 74388 Talheim (DE)
(74) Vertreter: Andres, Angelika Maria
(86) Internationale Anmeldenummer: PCT/EP2003/005769
(87) Internationale Veröffentlichungsnummer: WO 2003/105401

(56) Entgegenhaltungen:
- US-B1- 6 363 437
- KAPLINSKY C H: "THE D2B A ONE LOGICAL WIRE BUS FOR CONSUMER APPLICATIONS" IEEE TRANSACTIONS ON CONSUMER ELECTRONICS, IEEE INC. NEW YORK, US, Bd. CE-27, Nr. 1, Februar 1981 (1981-02), Seiten 102-116, XP000810835 ISSN: 0098-3063

## Beschreibung

Die vorliegende Erfindung betrifft ein Kommunikationssystem zum Datenaustausch zwischen einem Master und mindestens einem Slave.

Herkömmliche Kommunikationsverfahren verwenden eigens für die Synchronisation zwischen Master und Slave vorgesehene Synchronisationsbotschaften. Dieses Prinzip hat den Nachteil, dass während der Synchronisation keine Nutzdaten ausgetauscht werden können.

Ein weiterer Nachteil bekannter Verfahren besteht darin, dass die ausschließlich zur Synchronisation verwendeten Botschaften bzw. die für die Zusammenstellung einer Synchronisationsbotschaft erforderlichen Informationen wertvolle Ressourcen in dem Master/Slave belegen.

In dem Artikel "The D2B a One Logical Wire Bus for Consumer Applications" , IEEE Inc, New York, US, Bd. CE-27, Nr. 1, Februar 1981, Seiten 102-116, XP000810835, ISSN: 0098-3063 von Cecil H, Kapllnsky wird ein serieller Multimaster Bus beschrieben, bei dem sog. Mode-Bits zum Einsatz kommen. Die Mode-Bits enthalten Informationen, die definieren, in welchem Mode, d.h. mit welcher Übertragungsgeschwindigkeit, der Datentransfer erfolgt. Insbesondere wird der Mode, der für die Datenübertragung genutzt wird, zu Beginn eines Datenpakets durch mehrere Eins-Bits zwischen dem Startbit und dem ersten Null-Bit angegeben.

Demgemäß ist es Aufgabe der vorliegenden Erfindung, ein verbessertes gattungsgemäßes Kommunikations mit sehr einfachen Mitteln und mit geringem Ressourcenbedarf bereit, zustellen.

Diese Aufgabe wird durch die Merkmale des Anspruchs 1 gelöst.

Das Signalisierungsbit kann hierzu beispielsweise in Kopfdaten der Datenpakete vorgesehen sein, die üblicherweise weitere Steuerinformationen für die Kommunikation aufweisen. Dadurch erhält z.B. der Slave beim Empfang eines Datenpakets vom Master aktuelle Informationen darüber, in welchem Zustand sich der Master befindet.

Wenn der Master vor dem Absenden eines nächsten Datenpakets in einen anderen Zustand übergeht, setzt er das Signalisierungsbit des zu sendenden Datenpakets entsprechend, so dass der Slave beim Empfang dieses Datenpakets die information über die Zustandsänderung des Masters erhält.

Ebenso wertet der Master vom Slave gesendete Datenpakete und das darin enthaltene Signalisierungsbit aus und erhält auf diese Weise Informationen über den Zustand des Slaves.

Der Master und/oder der Slave nimmt nach dem Start des Kommunikationssystems den Initialisierungszustand an. In diesem Initialisierungszustand werden beispielsweise Informationen zur Identifikation des Masters/Slaves sowie Parameter für den weiteren Betrieb des Kommunikationssystems oder des Masters/Slaves ausgetauscht.

Weiterhin geht der Master von dem Initialisierungszustand in den Betriebszustand über, in dem der Anwendung des Kommunikationsverfahrens entsprechende Daten zwischen Master und Slave ausgetauscht werden.

Weiterhin ist vorgesehen, dass der Slave von dem Initialisierungszustand in den Betriebszustand übergeht, wenn die Initialisierung des Slaves abgeschlossen ist und der Master sich in dem

Betriebszustand befindet.

Solange der Slave sich in dem Initialisierungszustand befindet, kann er möglicherweise nicht alle von dem Master angeforderten Operationen durchführen. Damit der Master korrekt reagieren kann, beispielsweise durch das Einhalten einer vorgebbaren Wartezeit vor dem Anfordern der o.g. Operationen, setzt der Slave das Signalisierungsbit entsprechend seinem Initialisierungszustand und teilt auf diese Weise dem Master mit, dass er noch nicht bereit ist für den Betriebszustand.

Sobald die Initialisierung des Slaves abgeschlossen ist, geht auch der Slave in den Betriebszustand über, sofern sich der Master weiterhin im Betriebszustand befindet. Dann befinden sich Master und Slave im Betriebszustand.

Gemäβ einer vorteilhaften Variante der Erfindung ist a vorgesehen, dass das Kommikationsverfahren in der Prozesstechnik zum Einsatz in Mess- und/oder Reiniguns- und/oder Kalibrierungsanlagen im Bereich der Prozessautomatisierung, zur Messung von pH-Werten und/oder Redoxpotentialen und/oder anderen Prozessgrößen anwendbar ist.

Den Betriebszustand verlässt der Master/Slave erfindungsgemäß bei einer Störung des Masters/Slaves, um erneut in den Initialisierungszustand überzugehen.

Eine Störung kann sich beispielsweise dadurch ergeben, dass der Master/Slave durch einen Softwarefehler blockiert wird oder dass die Funktion durch elektromagnetische Störstrahlung beeinträchtigt wird.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer

Zusammenfassung in den Patentansprüchen oder deren Rückbeziehung sowie unabhängig von ihrer Formulierung bzw. Darstellung in der Beschreibung bzw. in der Zeichnung.
Figur 1 zeigt schematisch ein Zustandsdiagramm des Masters,
Figur 2 zeigt schematisch ein Zustandsdiagramm des Kommunikationssystems, und
Figur 3 zeigt schematisch ein erfindungsgemäßes Kommunikationssystem.

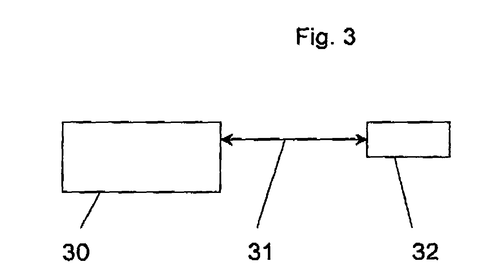

Das in Figur 3 abgebildete Kommunikationssystem weist einen Master 30 auf, der über eine Kommunikationsverbindung 31 mit einem Slave 32 Daten in Form von Datenpaketen austauscht.

Bei der Kommunikationsverbindung 31 handelt es sich um eine serielle

Kommunikationsverbindung, die im Halbduplex-Betrieb genutzt wird.

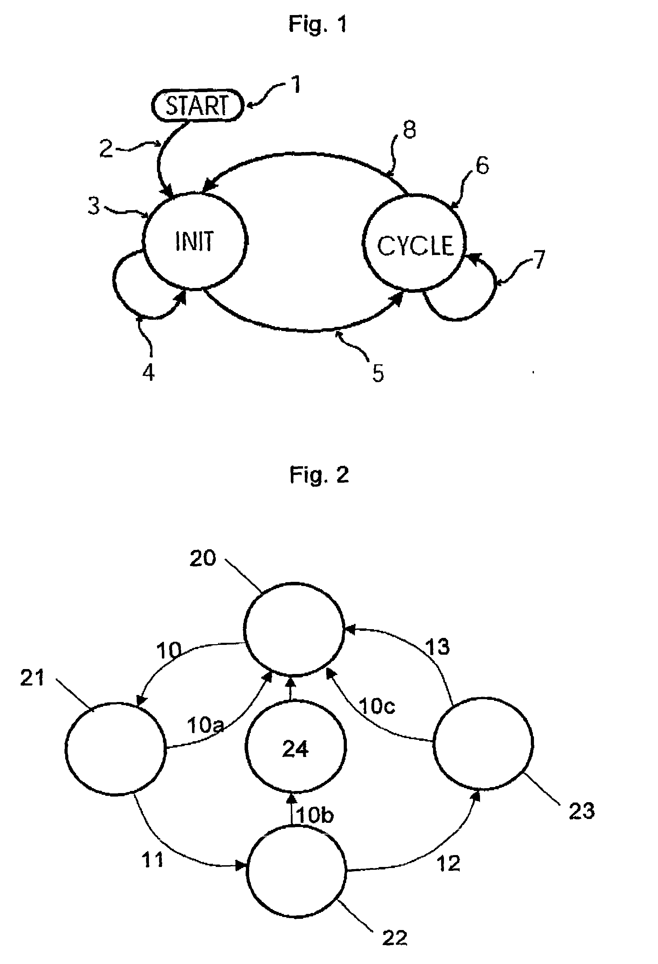

Nach dem Start des Kommunikationssystems aus Figur 3 befinden sich der Master 30 und der Slave 32 zunächst jeweils in einem Initialisierungszustand. In dem für den Master geltenden schematischen Zustandsdiagramm aus Figur 1 ist der Initiatisierungszustand 3 zur Verdeutlichung auch mit der Bezeichnung "INIT" versehen.

Neben dem Initialisierungszustand 3 ist in Figur 1 auch ein Betriebszustand 6 dargestellt, der in der Figur auch mit der Bezeichnung "CYCLE" versehen ist.

Ferner ist in der Figur 1 ein auch als "START" bezeichneter Startzustand 1 abgebildet, den der Master 30 unmittelbar nach dem Start des Kommunikationssystems einnimmt.

Nachfolgend werden die in Figur 1 durch Pfeile dargestellten Zustandsübergänge 2, 4, 5, 7, 8 am Beispiel des Masters 30 erläutert. Für den Slave 32 sind im wesentlichen dieselben Zustände 1, 3, 6 und Zustandsübergänge 2, 4, 5, 7, 8 definiert, weswegen das Zustandsdiagramm aus Figur 1 auf den Slave 32 entsprechend anwendbar ist.

Wie bereits beschrieben, nimmt der Master 30 (Fig. 3) unmittelbar nach dem Start des Kommunikationssystems den Startzustand 1 an, währenddessen interne Initialisierungsvorgänge wie z.B. Selbsttests oder Diagnoseprozeduren im Master 30 ablaufen.

Nach Abschluss der internen Initialisierungsvorgänge im Master 30 geht der Master 30 in den Initialisierungszustand 3 über, der dazu dient, die serielle Kommunikation mit dem Slave 32 (Fig. 3) über die Kommunikationsschnittstelle 31 zu initialisieren.

Auch der Slave 32 (Fig. 3) nimmt beim Start des Kommunikationssystems den Startzustand 1 an, den er, analog zum Master 30, nach dem Abschluss interner Initialisierungsvorgänge wieder verlässt, um in den Initialisierungszustand 3 überzugehen.

Daraufhin befinden sich der Master 30 und der Slave 32 gleichzeitig in dem Initialisierungszustand 3, wodurch der im Zustandsdiagramm des Kommunikationssystems, vgl. Figur 2, abgebildete Zustand 20 des Kommunikationssystems definiert ist. Das Kommunikationssystem selbst befindet sich also in seiner Initialisierungsphase.

Hierbei erfragt der Master 30 beispielsweise die Identifikation des Slaves 32 und tauscht für den weiteren Betrieb des Kommunikationssystems erforderliche Daten mit dem Slave 32 aus. Um dem Slave 32 die Initialisierungsphase des Kommunikationssystems anzuzeigen, setzt der Master 30 ein Signalisierungsbit in den für die Kommunikation vorgesehenen Datenpaketen, die er an den Slave 32 sendet, auf einen dem Initialisierungszustand 3 entsprechenden Wert.

Erst wenn der Master 30 die Initialisierung abgeschlossen hat, wechselt er von dem Initialisierungszustand 3 (Fig. 1) in den Betriebszustand 6 (Fig. 1), was durch den Zustandsübergang 5 symbolisiert ist. Dieser Zustandswechsel des Masters 30 wird dem Slave 32 dadurch signalisiert, dass der Master 30 das Signalisierungsbit auf einen dem Betriebszustand 6 entsprechenden Wert setzt.

Dem Zustandsübergang 5 der Masters 30 von dem Initialisierungszustand 3 zu dem Betriebszustand 6 entspricht der Zustandsübergang 10 des Kommunikationssystems vom Zustand 20 zum Zustand 21, vgl. Figur 2.

Sobald der Slave 32 nach dem Zustandswechsel des Masters 30 in den Betriebszustand 6 ein von dem Master 30 an den Slave 32 gesendetes Datenpaket empfängt, erkennt der Slave 32 an dem geänderten Wert des Signalisierungsbits den Zustandswechsel des Masters 30.

Infolgedessen begibt sich der Slave 32 von dem Initialisierungszustand 3 in den Betriebszustand 6 (Fig. 1), so dass das Kommunikationssystem über den Zustandsübergang 11 den in Figur 2 gezeigten Zustand 22 erreicht, der dadurch gekennzeichnet ist, dass sowohl der Master 30 als auch der Slave 32 jeweils im Betriebszustand 6 sind.

Falls der Slave 32 seine initialisierung nicht abschließen kann, bevor der Master 30 den Betriebszustand 6 erreicht und dies dem Slave 32 signalisiert, verbleibt der Slave 32 in dem Initialisierungszustand 3 (Fig. 1) und teilt dies dem Master 30 mit, indem er das Signalisierungsbit in an den Master 30 zu sendenden Datenpakete auf einen dem Initialisierungszustand 3 entsprechenden Wert setzt. Hieran erkennt der Master 30, dass der Slave 32 noch nicht bereit ist, den Betriebszustand 6 anzunehmen.

Der Master 30 wartet eine vorgebbare Zeit und verbleibt über den Zustandsübergang 7 in dem Betriebszustand 6, z.B. bis der Slave 32 über das Signalisierungsbit signalisiert, dass auch er den Betriebszustand 6 (Fig. 1) erreicht hat. In diesem Fall verbleibt das Kommunikationssystem gemäß Fig. 2 entsprechend in dem Zustand 21, bis es mit Erreichen des Betriebszustands 6 durch den Slave 32 schließlich in den Zustand 22 übergeht.

Falls der Slave 32 seinen Betriebszustand 6 gar nicht erreicht, bevor die im Master 30 vorgebbare Wartezeit abgelaufen ist, verlässt das Kommunikationssystem den Zustand 21 über den Zustandsübergang 10a (Fig. 2), um erneut die dem Zustand 20 entsprechende Initialisierungsphase zu beginnen. Der Master 30 wird hierzu über den Zustandsübergang 8 (Fig. 1) wieder in seinen Initialisierungszustand 3 versetzt.

Falls der Master 30 gestört ist, beispielsweise durch eine Blockierung oder einen softwareverursachten Systemabsturz, kann das Kommunikationssystem analog zu den vorstehenden Ausführungen über den Zustandsübergang 10a in die Initialisierungsphase mit dem Zustand 20 versetzt werden, wobei der Master 30 einen entsprechenden Zustandsübergang durchführt.

Die Erkennung einer Blockierung oder eines Systemabsturzes ist bei dem Master 30/Slave 32 beispielsweise durch eine Überwachungsschaltung (nicht gezeigt), z.B. durch eine sog. Watchdog-Schaltung möglich.

Im Normalbetrieb erreichen Master 30 und Slave 32 jeweils den Betriebszustand 6 (Fig. 1), so dass ein Austausch von Nutzdaten über das im Zustand 22 (Fig. 2) befindliche Kommunikationssystem möglich ist. In diesem Zustand setzen sowohl der Master 30 und der Slave 32 das Signalisierungsbit jeweils auf einen dem Betriebszustand 6 entsprechenden Wert.

Auch in dem Zustand 22 des Kommunikationssystems kann es durch Störungen vorkommen, dass z.B. das Signalisierungsbit auf einen falschen Wert gesetzt wird oder der Master 30 bzw. der Slave 32 gar nicht mehr reagiert.

In diesen Fällen geht das Kommunikationssystem analog zu den obenstehenden Ausführungen über die Zustandsübergänge 12, 10b zunächst in die Zustände 23, 24 über, bei denen entweder nur der Slave 32 oder nur der Master 30 im Initialisierungszustand 3 (Fig. 1) ist, wohingegen der Master 30 bzw. der Siave 32 weiterhin im Betriebszustand 6 verbleibt.

Den Zustand 23 (Fig. 2) des Kommunikationssystems erkennt der Master 30 daran, dass der Slave 32 das Signalisierungsbit auf einen dem Initialisierungszustand 3 entsprechenden Wert setzt, obwohl der Master 30 seinem Betriebszustand 6 entsprechend das Signalisierungsbit auf den mit dem Betriebszustand 6 korrespondierenden Wert setzt. Hierauf versetzt sich der Master 30 ebenfalls in den Initialisierungszustand 3 (Fig. 1), so dass das Kommunikationssystem schließlich mit dem Zustandsübergang 13 (Fig. 2) in den der Initialisierungsphase entsprechenden Zustand 20 gelangt.

Wenn nur der Master 30 im Initialisierungszustand 3 befindlich ist, vgl. Zustand 24 aus Fig. 2, erkennt der Slave 32 dies an dem entsprechend gesetzten Signalisierungsbit und wechselt ebenfalls in den Initialisierungszustand 3, was wiederum das Kommunikationssystem in den Zustand 20 versetzt.

Der Zustandsübergang 4 in Figur 1 deutet an, dass der Master 30/Slave 32 für eine gewisse Zeit in dem Initialisierungszustand 3 verbleiben kann. Bei dem Zustandsdiagramm aus Figur 2 sind derartige triviale Zustandsübergänge der Übersichtlichkeit halber nicht eingezeichnet. Gleichwohl kann das Kommunikationssystem, wie vorstehend erläutert, in den jeweiligen Zuständen 20, 21, 22, 23, 24 verweilen.

Insgesamt stellt das erfindungsgemäße Kommunikationssystem ein sich selbst synchronisierendes System dar, das mit sehr einfachen Mitteln und geringem Ressourcenbedarf auskommt. Der jeweilige Wert für das Signalisierungsbit eines zu sendenden Datenpakets kann beispielsweise direkt aus einem dem Master 30/Slave 32 zugrundeliegenden Zustandsautomaten entnommen werden, so dass kein zusätzlicher Speicher verwendet werden muss, um diese Information zu verwalten.

Der Master 30 kann auch mit mehreren Slaves 32 kommunizieren, die jeweils über eine eigene Kommunikationsverbindung 31 mit dem Master 30 verbunden sind. Hierbei wird das erfindungsgemäße Kommunikationsverfahren für jede der Kommunikationsverbindungen 31 unabhängig ausgeführt.

Der Master 30/Slave 32 kann beispielsweise als Mikrocontroller ausgebildet sein. Besonders vorteilhaft bei der vorliegenden Erfindung ist die Anordnung des Signalisierungsbits in den zum Datenaustausch verwendeten Datenpaketen, wodurch es möglich ist, mit einem Datenpaket sowohl Nutzdaten als auch Steuerdaten, nämlich die Zustandsinformation des Senders zu übertragen.

## Patentansprüche

1. Kommunikationssystem mit einem Master (30), der über eine Kommunikationsverbindung (31) Daten in Form von Datenpaketen mit mindestens einem Slave (32) austauscht, wobei der Master (30) und der Slave (32) jeweils zwei Zustände, einen Initialisierungszustand (3) und einen Betriebszustand, (6) aufweisen, wobei der Master (30) und/oder der Slave (32) nach dem Start (1) des Kommunikationssystems den Initialisierungszustand (3) annehmen, **dadurch gekennzeichnet, daß** das Kommunikationssystem ein sich selbst synchronisierendes System darstellt, wobei der Master (30) dem Slave (32) seinen Zustand (3, 6) durch entsprechendes Setzen eines in den zum Datenaustausch verwendeten Datenpaketen des Kommunikationssystems vorgesehenen Signalisierungsbits anzeigt, wobei der Slave (32) dem Master (30) seinen Zustand (3, 6) durch entsprechendes Setzen eines in den zum Datenaustausch verwendeten Datenpaketen des Kommunikationssystems vorgesehenen Signalisierungsbits anzeigt, wobei der Master (30) von dem Initialisierungszustand (3) in den Betriebszustand (6) übergeht, wenn die Initialisierung des Masters (30) abgeschlossen ist, wobei der Slave (32) von dem Initialisierungszustand (3) in den Betriebszustand (6) übergeht, wenn die Initialisierung des Slaves (32) abgeschlossen ist und der Master (30) sich in dem Betriebszustand (6) befindet, und wobei der Datenaustausch erfolgt, wenn der Master (30) und der Slave (31) sich im Betriebszustand befinden.

2. Kommunikationssystem nach Anspruch 1,
wobei der Master (30)/Slave (32) bei einer Störung des Masters (30)/Slaves (32) in den Initialisierungszustand (3) übergeht.

3. Kommunikationssystem nach Anspruch 1 oder Anspruch 2, wobei das Kommunikationssystem in der Prozesstechnik zum Einsatz in Mess- und/oder Reinigungs- und/oder Kalibrierungsanlagen im Bereich der Prozessautomatisierung, zur Messung von pH-Werten und/oder Redoxpotentialen und/oder anderen Prozessgrößen anwendbar ist.

## Claims

1. Communication system with a master (30) that exchanges data in the form of data packets with at least one slave (32) by means of a communication connection (31), where the master (30) and the slave (32) both exhibit two modes, namely an initialization mode (3) and an operating mode (6), where the master (30) and/or the slave (32) assume the initialization mode (3) when the communication system is started (1), **characterized in that** the communication system is a self-synchronizing system, where the master (30) communicates its mode (3, 6) to the slave (32) by setting an appropriate signaling bit provided in the data packets of the communication system used for exchanging data, where the slave (32) communicates its mode (3, 6) to the master (30) by setting an appropriate signaling bit provided in the data packets of the communication system used for exchanging data, where the master (30) switches from the initialization mode (3) to the operating mode (6) once the process of initializing the master (30) is complete and where the slave (32) switches from the initialization mode (3) to the operating mode (6) once the process of initializing the slave (32) is complete and the master (30) is in the operating mode (6) and data exchange takes place when the master (30) and slave (31) are in the operating mode.

2. Communication system as per Claim 1, where the master (30)/slave (32) goes to the initialization mode (3) when a malfunction in the master (30)/slave (32) occurs.

3. Communication system as per Claim 1 or Claim 2, where the communication system can be used in process engineering in measuring systems and/or cleaning systems and/or calibration systems in the area of process automation, for measuring pH values and/or oxidation-reduction potential and/or other process variables.

## Revendications

1. Système de communication pourvu d'un maître (30), qui échange par le biais d'une liaison de communication (31) des données sous la forme de paquets de données avec au moins un esclave (32), le maître (30) et l'esclave (32) présentant chacun deux états, un état d'initialisation (3) et un état de service (6), le maître (30) et/ou l'esclave (32) adoptant l'état d'initialisation (3) après le démarrage (1) du système de communication, **caractérisé en ce que** le système de communication constitue un système à synchronisation automatique, le maître (30) et l'esclave (32) signalant leur état (3, 6) par l'activation appropriée d'un bit de signalisation prévu dans le paquet de données du système de communication, utilisé pour l'échange de données, l'esclave (32) signalant au maître (30) son état (3, 6) par l'activation appropriée d'un bit de signalisation prévu dans le paquet de données du système de communication, utilisé pour l'échange de données, le maître (30) passant de l'état d'initialisation (3) à l'état de service (6) lorsque l'initialisation du maître (30) est terminée, l'esclave (32) passant de l'état d'initialisation (3) à l'état de service (6) lorsque l'initialisation de l'esclave (32) est terminée et si le maître (30) se trouve dans l'état de service (6), et l'échange de données intervenant lorsque le maître (30) et l'esclave (32) se trouvent dans l'état de service.

2. Système de communication selon la revendication 1, le maître (30) / l'esclave (32) passant dans l'état d'initialisation (3) en cas de défaut du maître (30) / de l'esclave (32).

3. Système de communication selon la revendication 1 ou 2, le système de communication pouvant être mis en oeuvre dans la technique des process, pour l'utilisation au sein de dispositifs de mesure et/ou de nettoyage et/ou d'étalonnage dans le domaine de l'automatisation des process, pour la mesure de pH et/ou de potentiels Redox et/ou d'autres grandeurs process.
